# EUROPEAN PATENT APPLICATION

(11) **EP 4 694 255 A1**
(43) Date of publication of application: **11.02.2026**
(21) Application number: 23929077.8
(22) Date of filing: 24.03.2023
(51) Int. Cl.: H04W 12/0431

(54) **KEY AGREEMENT METHOD, APPARATUS, DEVICE AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2023/083822
(87) International publication number: WO 2024/197474

(57) **Abstract**

The present disclosure provides a key agreement method, an apparatus, a device and a storage medium. The method comprises: receiving a key agreement request sent by a user equipment (UE), the key agreement request comprising a key identifier and/or key indication information respectively corresponding to at least one key supported by the UE and used for generating an OSCORE master secret; determining target information on the basis of the at least one key identifier and/or the at least one piece of key indication information in the key agreement request, the target information being used for indicating a target key, and the target key being a key used for generating the OSCORE master secret; and indicating the target key to the UE on the basis of the target information. Embodiments of the present disclosure provide a key agreement method used for determining, in agreement between a UE and a first entity, which key is specifically used to generate an OSCORE master secret, thereby ensuring that the UE and the first entity can successfully generate the OSCORE master secret, so that secure communication based on the OSCORE master secret can be realized between the UE and the first entity, and thus the security and stability of wireless communication are ensured.

## Description

### TECHNICAL FIELD

The present disclosure relates to the field of communication technology, and in particular to a method and an apparatus for key negotiation, a device, and a storage medium.

### BACKGROUND

In a communication system, a user equipment (UE) and a core network device may derive an object security for a constrained representational state transfer environment (OSCORE) master secret separately, so that an OSCORE secure connection can be built between the UE and the core network device based on the OSCORE master secret to ensure communication security.

### SUMMARY

The present disclosure provides a method and an apparatus for key negotiation, a device, and a storage medium.

In a first aspect, an embodiment of the present disclosure provides a method for key negotiation, including: receiving a key negotiation request sent from a user equipment (UE), wherein the key negotiation request comprises: at least one key identifier and/or at least one key indication information respectively corresponding to at least one key supported by the UE for deriving an object security for constrained representational state transfer environment (OSCORE) master secret; determining target information based on the at least one key identifier and/or the at least one key indication information in the key negotiation request, wherein the target information indicates a target key, and the target key is used for deriving the OSCORE master secret; and indicating the target key to the UE based on the target information.

In a second aspect, an embodiment of the present disclosure provides a method for key negotiation, including: sending a key negotiation request to a first entity, wherein the key negotiation request comprises: at least one key identifier and/or at least one key indication information respectively corresponding to at least one key supported by the UE for deriving an object security for constrained representational state transfer environment (OSCORE) master secret; and determining a target key based on an indication of the first entity.

In a third aspect, an embodiment of the present disclosure provides a communication device, including: a transceiver module, configured to receive a key negotiation request sent from a user equipment (UE), wherein the key negotiation request comprises: at least one key identifier and/or at least one key indication information respectively corresponding to at least one key supported by the UE for deriving an object security for constrained representational state transfer environment (OSCORE) master secret; and a processing module, configured to determine target information based on the at least one key identifier and/or the at least one key indication information in the key negotiation request, wherein the target information indicates a target key, and the target key is used for deriving the OSCORE master secret; wherein the transceiver module is further configured to indicate the target key to the UE based on the target information.

In a fourth aspect, an embodiment of the present disclosure provides a communication device, including: a transceiver module, configured to send a key negotiation request to a first entity, wherein the key negotiation request comprises: at least one key identifier and/or at least one key indication information respectively corresponding to at least one key supported by a user equipment (UE) for deriving an object security for constrained representational state transfer environment (OSCORE) master secret; and a processing module, configured to determine a target key based on an indication of the first entity.

In a fifth aspect, an embodiment of the present disclosure provides a communication device. The communication device includes a processor. When the processor calls a computer program in a memory, the method described in the first aspect or the second aspect is executed.

In a sixth aspect, an embodiment of the present disclosure provides a communication device. The communication device includes a processor and a memory having a computer program stored thereon. The processor executes the computer program stored in the memory to cause the communication device to perform the method described in the first aspect or the second aspect.

In a seventh aspect, an embodiment of the present disclosure provides a communication device. The communication device includes a processor and an interface circuit. The interface circuit is configured to receive code instructions and transmit the code instructions to the processor, and the processor is configured to run the code instructions to cause the communication device to perform the method described in the first aspect or the second aspect.

In an eighth aspect, an embodiment of the present disclosure provides a communication system. The communication system includes the communication device described in the third aspect or the fourth aspect, or the communication system includes the communication device described in the fifth aspect, or the communication system includes the communication device described in the sixth aspect, or the system includes the communication device described in the seventh aspect.

In a ninth aspect, an embodiment of the present disclosure provides a computer-readable storage medium for storing instructions used by the above-mentioned network device, and when the instructions are executed, the terminal is caused to perform the method described in the first aspect or the second aspect.

In a tenth aspect, the present disclosure provides a computer program product comprising a computer program that, when executed on a computer, causes the computer to perform the method described in the first aspect or the second aspect above.

In an eleventh aspect, the present disclosure provides a chip system, which includes at least one processor and an interface, for supporting a network device to implement the functions involved in the method described in the first aspect or the second aspect, such as determining or processing at least one of the data and information involved in the above method. In a possible design, the chip system further includes a memory, which is configured to store computer programs and data necessary for a source auxiliary node. The chip system can be composed of a chip, or it can include a chip and other discrete devices.

In a twelfth aspect, the present disclosure provides a computer program, which, when executed on a computer, causes the computer to perform the method described in the first aspect or the second aspect.

In a thirteenth aspect, the present disclosure provides a communication system, which includes a UE and a core network device. The core network device is configured to implement the method for key negotiation described in the first aspect, and the UE is configured to implement the method for key negotiation described in the second aspect.

In a fourteenth aspect, the present disclosure provides a communication method, performed by a communication system, the method comprising: sending, by a user equipment (UE), a key negotiation request to a core network device, wherein the key negotiation request comprises: at least one key identifier and/or at least one key indication information respectively corresponding to at least one key supported by the UE for deriving an object security for constrained representational state transfer environment (OSCORE) master secret; determining, by the core network device, target information based on the at least one key identifier and/or the at least one key indication information in the key negotiation request, wherein the target information indicates a target key, and the target key is used for deriving the OSCORE master secret; and indicating, by the core network device, the target key to the UE based on the target information.

### BRIEF DESCRIPTION OF THE DRAWINGS

The above and/or additional aspects and advantages of the present disclosure may become apparent and easily understood from the following description of the embodiments in conjunction with the accompanying drawings, in which:
FIG. 1 is a schematic diagram of an architecture of a communication system provided by an embodiment of the present disclosure;
FIG. 2 is a flow chart of a method for key negotiation according to an embodiment of the present disclosure;
FIG. 3 is a flow chart of a method for key negotiation according to an embodiment of the present disclosure;
FIG. 4 is a flow chart of a method for key negotiation according to an embodiment of the present disclosure;
FIG. 5 is a flow chart of a method for key negotiation according to an embodiment of the present disclosure;
FIG. 6 is a flow chart of a method for key negotiation according to an embodiment of the present disclosure;
FIG. 7 is a flow chart of a method for key negotiation according to an embodiment of the present disclosure;
FIG. 8a is a flow chart of a method for key negotiation according to an embodiment of the present disclosure;
FIG. 8b is a flow chart of a method for key negotiation according to an embodiment of the present disclosure;
FIG. 8c is a flow chart of a method for key negotiation according to an embodiment of the present disclosure;
FIG. 9 is a flow chart illustrating interaction of a method for key negotiation provided in an embodiment of the present disclosure;
FIG. 10 is a block diagram of a communication device provided by an embodiment of the present disclosure;
FIG. 11 is a block diagram of a communication device provided by an embodiment of the present disclosure;
FIG. 12 is a block diagram of a communication device provided by an embodiment of the present disclosure;
FIG. 13 is a schematic diagram of a structure of a chip provided by an embodiment of the present disclosure.

### DETAILED DESCRIPTION

Embodiments are described in detail herein, examples of which are shown in the accompanying drawings. When the following description refers to the drawings, unless otherwise indicated, the same numbers in different drawings represent the same or similar elements. The implementations described in the following embodiments do not represent all implementations consistent with the embodiments of the present disclosure. Instead, they are merely examples of devices and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a" and "the" used in the embodiments of the present disclosure and the appended claims are also intended to include plural forms, unless the context clearly indicates other meanings. It should also be understood that the term "and/or" used herein refers to and includes any or all possible combinations of one or more associated listed items.

It should be understood that although the terms first, second, third, etc. may be configured to describe various information in the embodiments of the disclosure, the information should not be limited to these terms. These terms are only configured to distinguish the same type of information from each other. For example, without departing from the scope of the embodiments of the disclosure, the first information may also be referred to as the second information, and similarly, the second information may also be referred to as the first information. Depending on the context, the word "if" and "in a case where" as used herein may be interpreted as "at the time of" or "when" or "in response to determining".

Embodiments of the present disclosure are described in detail below, examples of which are shown in the accompanying drawings, in which the same or similar reference numerals throughout represent the same or similar elements. The embodiments described below with reference to the accompanying drawings are illustrative and are intended to be used to explain the present disclosure, and should not be construed as limiting the present disclosure.

In the related art, an object security for constrained representational state transfer environment (OSCORE) master secret can be derived based on a generic bootstrapping architecture (GBA) related key or an authentication and key management for applications (AKMA) related key of the 3rd Generation Partnership Project (3GPP) certification. That is, there can be multiple keys for deriving the OSCORE master secret. Therefore, a user equipment (UE) and a core network device need to negotiate which key to use to derive the OSCORE master secret, and a method for key negotiation is urgently needed.

To better understand a method for key negotiation in an embodiment of the present disclosure, a communication system to which embodiments of the present disclosure are applicable is described below.

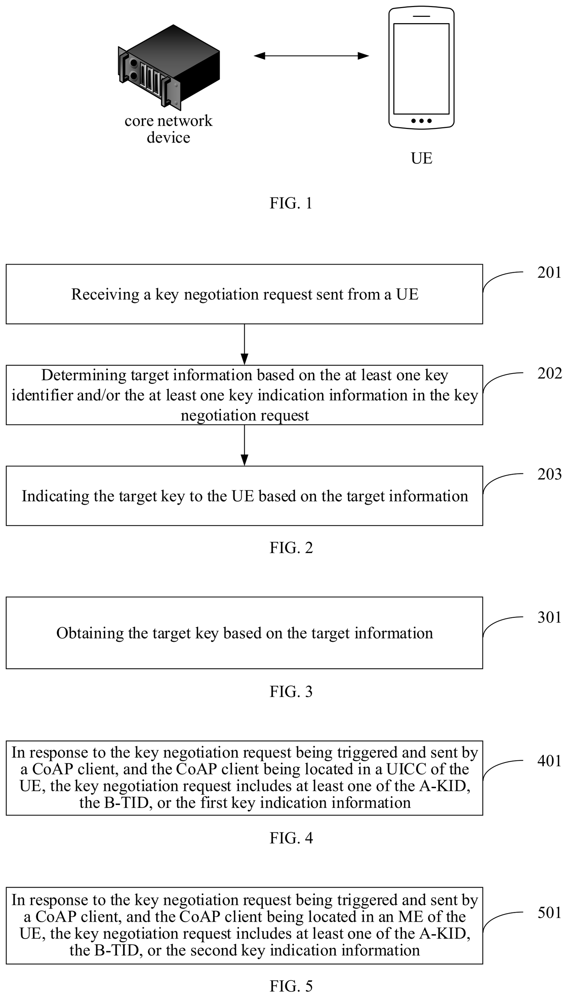

With reference to FIG. 1, FIG. 1 is a schematic diagram of an architecture of a communication system provided by an embodiment of the present disclosure. The communication system may include but is not limited to at least one core network device and at least one UE. The number and form of devices shown in FIG. 1 are only used for example and do not constitute a limitation on embodiments of the present disclosure. One or more core network devices, or one or more UEs may be included during application. The communication system shown in FIG. 1 takes one core network device and one UE as an example.

It should be noted that the technical solution of embodiments of the present disclosure can be applied to various communication systems, such as a long term evolution (LTE) system, a fifth generation (5G) mobile communication system, a 5G new radio (NR) system, or other future new mobile communication systems.

The core network device in embodiments of the present disclosure may be a device deployed in a core network, and a function of the core network device is to provide user connection, user management and service bearing, and to act as an interface provided to an external network by a bearer network. For example, the core network device in the 5G NR system may include at least one of an application function (AF), a network application function (NAF), an authentication and key management for applications anchor function (AAnF), a bootstrapping server function (BSF), an access and mobility management function (AMF), a user plane function (UPF), a session management function (SMF), a mobility management entity (MME), etc.

The UE in embodiments of the present disclosure may be an entity on the user side for receiving or transmitting signals, such as a mobile phone. The UE may also be referred to as a terminal, a terminal equipment, a mobile station (MS), a mobile terminal (MT), etc. UE may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present disclosure do not limit the specific technology and specific device form adopted by the UE.

It can be understood that the communication system described in embodiments of the present disclosure is for the purpose of clearly illustrating the technical solution of the embodiments of the present disclosure, and does not constitute a limitation on the technical solution provided by the embodiments of the present disclosure. Those skilled in the art can know that with the evolution of the system architecture and the emergence of new service scenarios, the technical solution provided by embodiments of the present disclosure is also applicable to similar technical problems.

In addition, in order to facilitate understanding of the embodiments of the present disclosure, the following points are explained.

First, in the present disclosure, in the absence of contradiction, each step in any implementation or embodiment can be implemented as an independent embodiment, and the steps can be arbitrarily combined. For example, a solution after removing some steps in a certain implementation or embodiment can also be implemented as an independent example, and the order of the steps in a certain implementation or embodiment can be arbitrarily exchanged. In addition, optional methods or optional examples in a certain implementation or embodiment can be arbitrarily combined, and various implementations or embodiments can be arbitrarily combined. For example, some or all steps of different implementations or embodiments can be arbitrarily combined, and a certain implementation or embodiment can be arbitrarily combined with an optional method or optional example of other implementations or embodiments.

Second, regarding the descriptions of the present disclosure such as "A or B", "A and/or B", "at least one of A and B", "A in one case, B in another case", "in response to one case A, in response to another case B", etc., at least one of the following schemes may be included according to the situation: executing A independently of B, i.e., A in some embodiments; executing B independently of A, i.e., B in some embodiments; selectively executing A or B, i.e., selecting from A and B to execute in some embodiments; executing both A and B, i.e., A and B in some embodiments.

Third, each element, each row, or each column in a table involved in the present disclosure can be implemented as an independent embodiment, and a combination of any elements, any rows, and any columns can also be implemented as an independent embodiment.

Fourth, in some implementations or embodiments, "including A", "comprising A", "configured to indicate A" and "carrying A" in the present disclosure can be directly interpreted as carrying A or indirectly indicating A.

Fifth, in some implementations or embodiments, "in response to ...", "in a case of ...", "at the time of ...", "when ...", "if ...", "in a case where ...", etc. in the present disclosure can be replaced with each other.

FIG. 2 is a flow chart of a method for key negotiation provided by an embodiment of the present disclosure. The method is performed by a first entity. As shown in FIG. 2, the method for key negotiation may include the following steps.

Step 201, a key negotiation request sent from a UE is received.

Optionally, in an embodiment of the present disclosure, the first entity may be a core network device. For example, the first entity may be an application function (AF) or a network application function (NAF).

Optionally, in an embodiment of the present disclosure, the key negotiation request may be sent via a constrained application protocol (CoAP) request message.

Optionally, in an embodiment of the present disclosure, the key negotiation request includes at least one key identifier and/or at least one key indication information respectively corresponding to at least one key supported by the UE for deriving an OSCORE master secret
Optionally, in an embodiment of the present disclosure, the above-mentioned "at least one key for deriving an OSCORE master secret" may include at least one of: a GBA related key; or an AKMA related key.

Optionally, the above-mentioned GBA related key may include a first key and a second key. For example, the first key may be Ks_int_NAF, and the second key may be Ks_ext_NAF.

Optionally, the above-mentioned AKMA related key may be, for example, an AKMA application key (AKMAApplicationkey, K_{AF}).

Optionally, in an embodiment of the present disclosure, the keys supported by different UEs for deriving the OSCORE master secret may be different. For example, UE#1 may support deriving the OSCORE master secret using the AKMA related keys, UE#2 may support deriving the OSCORE master secret using the first key and the second key in the GBA related key, and UE#2 may support deriving the OSCORE master secret using the AKMA related key and the first key in the GBA related key. Therefore, in an embodiment of the present disclosure, the key negotiation request sent by the UE to the first entity may include the at least one key identifier and/or the at least one key indication information corresponding to the at least one key supported by the UE for deriving the OSCORE master secret, so that the first entity can determine the at least one key supported by the UE for deriving the OSCORE master secret based on the at least one key identifier and/or the at least one key indication information, and then determine which key is used to derive the OSCORE master secret among the at least one key.

Optionally, in an embodiment of the present disclosure, the at least one key identifier included in the key negotiation request may include at least one of: an authentication and key management for applications key identifier (A-KID) corresponding to the AKMA related key; or a bootstrapping transaction identifier (B-TID) corresponding to the GBA related key.

Optionally, in an embodiment of the present disclosure, the above-mentioned A-KID may indicate that the key supported by the UE for deriving the OSCORE master secret includes the AKMA related key. Optionally, in an embodiment of the present disclosure, when the UE supports using the AKMA related key to derive the OSCORE master secret, the UE may include the A-KID in the key negotiation request to indicate to the first entity that the UE supports using the AKMA related key to derive the OSCORE master secret.

Optionally, in an embodiment of the present disclosure, the above-mentioned B-TID may indicate that the key supported by the UE for deriving the OSCORE master secret includes the GBA related key. Optionally, in an embodiment of the present disclosure, when the UE supports using the GBA related key to derive the OSCORE master secret, the UE may include the B-TID in the key negotiation request to indicate to the first entity that the UE supports using the GBA related key to derive the OSCORE master secret.

It should be noted that, in an embodiment of the present disclosure, it can be known from the foregoing content that there are multiple GBA related keys (i.e., the first key and the second key). Therefore, when the key negotiation request includes the B-TID (i.e., when the key negotiation request indicates that the UE supports using the GBA related key to derive the OSCORE master secret), the UE may further indicate to the first entity through the key negotiation request which key or keys among the multiple GBA related keys the UE supports for deriving the OSCORE master secret. Optionally, the UE can indicate to the first entity which key or keys among the multiple GBA related keys the UE supports for deriving the OSCORE master secret through at least one of the following methods.

First method: the key negotiation request includes the B-TID, and the B-TID may include a first key hint, and the first key hint may include first key indication information corresponding to the first key and/or second key indication information corresponding to the second key.

Optionally, in an embodiment of the present disclosure, the first key indication information may indicate that the key supported by the UE for deriving the OSCORE master secret includes the first key in the GBA related key, and the second key indication information may indicate that the key supported by the UE for deriving the OSCORE master secret includes the second key in the GBA related key.

Optionally, in an embodiment of the present disclosure, when the first key hint includes the first key indication information, it means that the at least one key supported by the UE for deriving the OSCORE master secret include the first key in the GBA related key; when the first key hint includes the second key indication information, it means that the at least one key supported by the UE for deriving the OSCORE master secret include the second key in the GBA related key; when the first key hint includes the first key indication information and the second key indication information, it means that the at least one key supported by the UE for deriving the OSCORE master secret include the first key and the second key in the GBA related key.

Optionally, in an embodiment of the present disclosure, a format of the B-TID including the first key hint may be as follows:

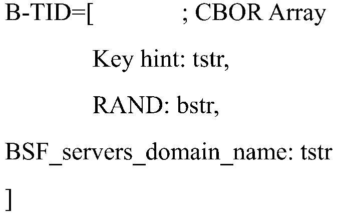

Or the format of the B-TID including the first key hint may be as follows:

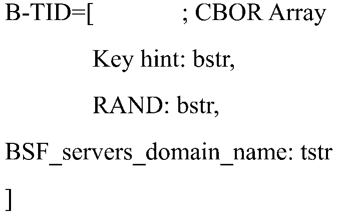

Optionally, the above RAND is an authentication random number, the above BSF_servers_domain_name is a server domain name, and the above Key hint is the first key hint.

Optionally, the "CBOR Array" can be used to indicate how to interpret the B-TID. For example, the CBOR Array in the B-TID can indicate the following. The text before the colon in each line of the B-TID represents an item recorded in the line (for example, the recorded item can be the RAND, the BSF_servers_domain_nam or the Key hint), and the text that follows the colon represents a specific parameter corresponding to the item, in which the tstr and bstr are used to indicate a recording format of the specific parameter. For example, tstr (textstring) indicates recording in a text format, and bstr (byte string) indicates recording in a byte format.

Therefore, the first entity can know which key or keys in the GBA related key the UE supports to derive the OSCORE master secret by identifying the Key hint in the B-TID. Optionally, when the Key hint in the B-TID includes the first key indication information, it means that the UE supports using the first key in the GBA related key to derive the OSCORE master secret, when the Key hint in the B-TID includes the second key indication information, it means that the UE supports using the second key in the GBA related key to derive the OSCORE master secret, and when the Key hint in the B-TID includes the first key indication information and the second key indication information, it means that the UE supports using the first key and the second key in the GBA related key to derive the OSCORE master secret.

Second method: the key negotiation request includes the B-TID, and the key negotiation request may further include a first key hint. For a detailed introduction to the first key hint, reference may be made to the content of the first method mentioned above.

Optionally, the second method is different from the first method in that the first key hint is included in the B-TID in the first method, while the first key hint is not included in the B-TID but is included in the key negotiation request in the second method.

Optionally, in an embodiment of the present disclosure, a format of the key negotiation request including the first key hint may be as follows:

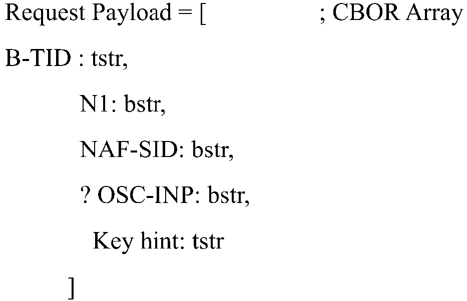

Or the format of the key negotiation request including the first key hint may be as follows:

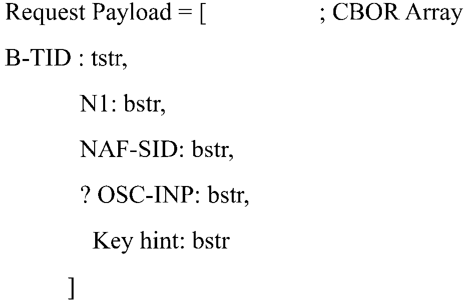

Optionally, when the first key hint is not included in the B-TID but is included in the key negotiation request, the format of the B-TID in the key negotiation request may be:

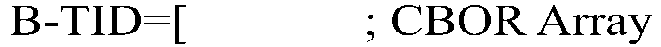

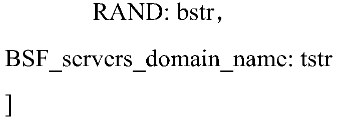

Optionally, the "N1, NAF-SID, OSC-INP" in the key negotiation request are existing parameters, which are not introduced in detail. The above-mentioned "Key hint" in the key negotiation request is the first key hint. For the introduction of "CBOR Array" and other parameters, reference may be made to the introduction of the first method.

Optionally, the first entity can know which key or keys in the GBA related key the UE supports to derive the OSCORE master secret by identifying the Key hint in the key negotiation request. Optionally, when the Key hint in the key negotiation request includes the first key indication information, it means that the UE supports using the first key in the GBA related key to derive the OSCORE master secret, when the Key hint in the key negotiation request includes the second key indication information, it means that the UE supports using the second key in the GBA related key to derive the OSCORE master secret, and when the Key hint in the key negotiation request includes the first key indication information and the second key indication information, it means that the UE supports using the first key and the second key in the GBA related key to derive the OSCORE master secret.

From the above content, it can be seen that when the key negotiation request sent by the UE to the first entity includes the B-TID (that is, the key negotiation request indicates that the UE supports using the GBA related key to derive the OSCORE master secret), the UE can carry the first key hint through the above two methods, so as to use the first key hint to further indicate to the first entity which key or keys in the GBA related key the UE supports to derive the OSCORE master secret.

Optionally, in an embodiment of the present disclosure, the key negotiation request may be triggered by the UE and sent to the first entity, or may be triggered by a CoAP client in the UE and sent to the first entity. The CoAP client may be located in a universal integrated circuit card (UICC) of the UE, or in a mobile equipment (ME) of the UE.

Optionally, "the UE triggers and sends the key negotiation request" can be understood as follows. The UE decides to send the key negotiation request to the first entity. For example, the UE decides to use its own transmission module to send the key negotiation request to the first entity, or the UE instructs the CoAP client to send the key negotiation request to the first entity. For example, the UE can send an instruction to the CoAP client, and the instruction instructs the CoAP client to send the key negotiation request to the first entity.

Optionally, "the CoAP client triggers and sends the key negotiation request" can be understood as follows. The CoAP client decides to send the key negotiation request to the first entity. For example, the CoAP client decides to send the key negotiation request to the first entity by itself, or the CoAP client instructs a transmission module of the UE to send the key negotiation request to the first entity. For example, the CoAP client can send an instruction to the transmission module of the UE, and the instruction instructs the transmission module of the UE to send the key negotiation request to the first entity.

It should be noted that in an embodiment of the present disclosure, the content that the key negotiation request includes may vary with a method for triggering the the key negotiation request. When the key negotiation request is triggered and sent by the CoAP client of the UE, the content that the key negotiation request include may vary with a location of the CoAP client in the UE.

Optionally, for the case where "the key negotiation request is triggered and sent by the CoAP client of the UE", in an embodiment of the present disclosure, when the CoAP client is located in the UICC of the UE, the key negotiation request triggered and sent by the CoAP client may include at least one of the A-TID, the B-TID, or the first key indication information (i.e., key indication information corresponding to Ks_int_NAF), and cannot include the second key indication information (i.e., key indication information corresponding to Ks_ext_NAF). When the CoAP client is located in the ME of the UE, the key negotiation request triggered and sent by the CoAP client may include at least one of the A-TID, the B-TID, or the second key indication information (i.e., key indication information corresponding to Ks_ext_NAF), and cannot include the first key indication information (i.e., key indication information corresponding to Ks_int_NAF).

The reason why "when the CoAP client is located in the UICC of the UE, the key negotiation request triggered by the CoAP client cannot include the second key indication information, and when the CoAP client is located in the ME of the UE, the key negotiation request triggered by the CoAP client cannot include the first key indication information" is introduced below.

Optionally, the UICC is used to derive the Ks_int_NAF (i.e., the first key), and it cannot derive the Ks_ext_NAF (i.e., the second key), therefore, when the CoAP client is located in the UICC, the CoAP client cannot obtain the second key, and thus the key negotiation request triggered and sent by the CoAP client cannot include the second key indication information corresponding to the second key. The ME is used to derive the Ks_ext_NAF (i.e., the second key), and it cannot derive the Ks_int_NAF (i.e., the first key), therefore, when the CoAP client is located in the ME, the CoAP client cannot obtain the first key, and thus the key negotiation request triggered and sent by the CoAP client cannot include the first key indication information corresponding to the first key.

Optionally, for the case where "the key negotiation request is triggered and sent by the UE", the key negotiation request triggered and sent by the UE may include at least one of the A-TID, the B-TID, the first key indication information (i.e., key indication information corresponding to Ks_int_NAF), or the second key indication information (i.e., key indication information corresponding to Ks_ext_NAF).

The reason why "when the key negotiation request is triggered and sent by the UE, the key negotiation request triggered and sent by the UE can include both the first key indication information and the second key indication information" is introduced below.

Optionally, the UE includes the UICC and the ME, thus, the UE can obtain the first key derived by the UICC and the second key derived by the ME. Therefore, the key negotiation request triggered by the UE can include both the first key indication information corresponding to the first key and the second key indication information corresponding to the second key.

Step 202, target information is determined based on the at least one key identifier and/or the at least one key indication information in the key negotiation request.

Optionally, in an embodiment of the present disclosure, the target information is used to indicate a target key, and the target key may be a key determined by the first entity for deriving the OSCORE master secret. Optionally, the target key may be a key among at least one key indicated by the key negotiation request. Furthermore, the target information may be a key identifier and/or key indication information corresponding to the target key.

Optionally, in an embodiment of the present disclosure, a method for the first entity to determine the target information based on the at least one key identifier and/or the at least one key indication information in the key negotiation request may include the following steps.

In a first step, based on a capability and/or a local priority policy of the first entity, the target key is selected from the at least one key indicated by the key negotiation request.

Optionally, in an embodiment of the present disclosure, the capability of the first entity may be used to indicate a key supported by the first entity for deriving the OSCORE master secret.

Optionally, in an embodiment of the present disclosure, the key supported by the first entity can be determined from the at least one key indicated by the key negotiation request based on the capability of the first entity. When the number of keys supported by the first entity is determined to be one, the one key can be directly determined as the target key. When the number of keys supported by the first entity is determined to be multiple, a key can be selected from the multiple keys as the target key based on a local policy of the first entity. Optionally, the local policy can be the local priority policy (i.e., selection based on a usage priority of the key) or a random selection policy. That is, in an embodiment of the present disclosure, the first entity can select a key from the multiple keys as the target key based on the usage priorities of different keys. Optionally, the usage priorities of the different keys can be configured by other core network devices, or can be agreed upon by the protocol. Optionally, in another embodiment of the present disclosure, the first entity can randomly select a key from the multiple keys as the target key.

For example, if the key negotiation request received by the first entity includes: the A-KID, the B-TID, the first key indication information, and the second key indication information, the at least one key indicated by the key negotiation request is: the AKMA related key, the first key, and the second key. If the key supported by the first entity for deriving the OSCORE master secret includes: the AKMA related key and the first key, among the at least one key indicated by the key negotiation request, the first entity supports two keys, namely, the AKMA related key and the first key, then the first entity may select a key from the AKMA related key and the first key as the target key. The first entity can select a key with a higher priority from the AKMA related key and the first key as the target key based on the usage priorities of the keys. For example, if the usage priorities of the keys are: the usage priority of the AKMA related key being higher than the usage priority of the GBA related key, and the usage priority of the first key in the GBA related key being higher than the usage priority of the second key, the first entity can select the AKMA related key with the higher priority as the target key based on the usage priorities of the keys. Optionally, the first entity may randomly select a key from the AKMA related key and the first key as the target key. For example, the AKMA related key may be randomly selected as the target key.

In a second step, a key identifier and/or key indication information corresponding to the selected target key is determined as the target information.

Optionally, in an embodiment of the present disclosure, when the target key selected by the first entity is the AKMA related key, the key identifier "A-KID" corresponding to the AKMA related key can be determined as the target information. When the target key selected by the first entity is the first key, the key identifier "B-TID" corresponding to the first key and the first key indication information corresponding to the first key can be determined as the target information. When the target key selected by the first entity is the second key, the key identifier "B-TID" corresponding to the second key and the second key indication information corresponding to the second key can be determined as the target information.

In addition, it should be noted that in an embodiment of the present disclosure, there may be a situation where "the at least one key indicated by the key negotiation request does not include a key supported by the first entity". When this situation occurs, it indicates that the key negotiation between the first entity and the UE fails. In this case, the target information determined in step 202 can be used to indicate a failure of the key negotiation.

Step 203, the target key is indicated to the UE based on the target information.

Optionally, in an embodiment of the present disclosure, the "indicating the target key identifier to the UE" may include: sending a key negotiation response to the UE. Optionally, the key negotiation response may be sent, for example, via a CoAP response message, and the key negotiation response may include a second key hint. The second key hint may be determined based on the target information, and the second key hint may indicate the target key.

Optionally, a method in which the second key hint indicates the target key may include at least one of the followings.

The second key hint indicates the target key by including the target information;
The second key hint indicates the target key by indicating the target information. Optionally, the at least one key identifier and/or the at least one key indication information included in the key negotiation request may correspond to different indexes and/or serial numbers, respectively. Based on this, the second key hint may indicate the target information by carrying an index and/or a serial number corresponding to the target information, thereby indicating the target key. For example, the key negotiation request received by the first entity in the step 201 includes the A-KID, the B-TID, and the first key indication information, in which indexes of the A-KID, the B-TID, and the first key indication information are index #1, index #2, and index #3, respectively. The target information determined by the first entity in the step 202 is the B-TID and the first key indication information. Then, the second key hint sent by the first entity to the UE in step 203 may carry the index #2 and the index #3, so that the UE can know that the target information determined by the first entity is the B-TID and the first key indication information based on the second key hint, and further know that the target key determined by the first entity is the first key.

Optionally, a format of the key negotiation response including the second key hint may be as follows:

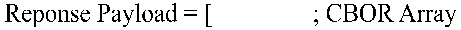

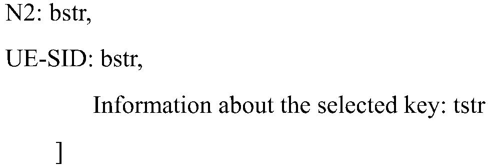

Or the format of the key negotiation response including the second key hint may be:

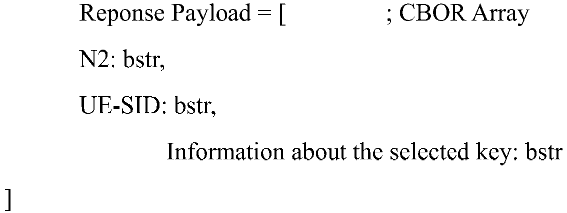

Optionally, the "N2, UE-SID" in the key negotiation response are existing parameters, which are not introduced in detail. The "Information about the selected key" in the key negotiation response is the second key hint. For the introduction of "CBOR Array" and other parameters, reference may be made to the aforementioned content.

Therefore, in an embodiment of the present disclosure, the first entity indicates the target key to the UE through the "Information about the selected key", so that the UE can determine the target key based on the indication of the first entity, and further derive the OSCORE master secret based on the target key, so that the UE can achieve secure communication with the first entity based on the derived OSCORE master secret, thereby ensuring the security and stability of wireless communication.

It should be noted that, in an embodiment of the present disclosure, when the first entity determines that the key negotiation fails in the step 202, the first entity may not indicate the target key to the UE based on the target information in step 203, but may indicate a key negotiation failure to the UE. Optionally, the first entity may send the key negotiation response to the UE, and the key negotiation response may be sent, for example, via the CoAP response message, and the key negotiation response may include the second key hint, which may be used to indicate the key negotiation failure and/or a cause of the key negotiation failure. For the format of the key negotiation response, reference may be made to the following description, in which the failure cause is used to indicate the cause of the key negotiation failure.

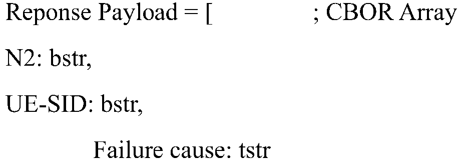

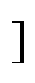

Or the format of the key negotiation response can be expressed in the following format:

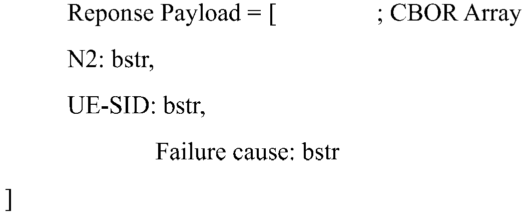

For a detailed description of the above parameters, reference may be made to the description of the aforementioned embodiment.

In summary, in the method for key negotiation provided by the embodiment of the present disclosure, the first entity may receive the key negotiation request sent by the UE, and the key negotiation request includes the at least one key identifier and/or the at least one key indication information corresponding to the at least one key supported by the UE for deriving the OSCORE master secret; thereafter, the first entity may determine the target information based on at least one key identifier and/or the at least one key indication information in the key negotiation request, and the target information is used to indicate the target key, and the target key is the key for deriving the OSCORE master secret selected by the first entity from the at least one key indicated by the at least one key identifier and/or the at least one key indication information in the key negotiation request; and the first entity may indicate the target key to the UE based on the target information. In this way, embodiments of the present disclosure provide a method for key negotiation for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, and the security and stability of wireless communication can be ensured.

FIG.3 is a flow chart of a method for key negotiation provided by an embodiment of the present disclosure. The method is performed by a first entity. As shown in FIG. 3, the method for key negotiation may include the following steps.

Step 301, the target key is obtained based on the target information.

Optionally, in an embodiment of the present disclosure, after the first entity executes the step 202 (i.e., after determining the target information), the first entity may obtain the target key corresponding to the target information from other core network devices based on the target information, so as to further derive the OSCORE master secret based on the target key. When the target information selected by the first entity is different, the first entity may obtain the corresponding target key from different core network devices.

Optionally, in an embodiment of the present disclosure, in response to the target information including the A-KID, indicating that the target key selected by the first entity is the AKMA related key (i.e., K_{AF}), the first entity can obtain the AKMA related key K_{AF} from an AKMA anchor function (AAnF) of the application layer based on the target information (i.e., A-KID). Optionally, the first entity can send a first request to the AAnF, the first request carrying the A-KID, and the AAnF can send the corresponding AKMA related key K_{AF} to the first entity based on the A-KID in the first request.

Optionally, in another embodiment of the present disclosure, when the target information includes the B-TID and the first key indication information, it indicates that the target key selected by the first entity is the first key (ie, Ks_int_NAF), and at this time, the first entity can obtain the first key from a BSF based on the B-TID and the first key indication information. Optionally, the first entity can send a second request to the BSF, the second request carrying the B-TID and the first key indication information, and the BSF can send the first key to the first entity based on the B-TID and the first key indication information in the second request.

Optionally, in another embodiment of the present disclosure, when the target information includes the B-TID and the second key indication information, it indicates that the target key selected by the first entity is the second key (i.e., Ks_ext_NAF), and at this time, the first entity can obtain the second key from the BSF based on the B-TID and the second key indication information. Optionally, the first entity can send a third request to the BSF, the third request carrying the B-TID and the second key indication information, and the BSF can send the second key to the first entity based on the B-TID and the second key indication information in the third request.

Optionally, in an embodiment of the present disclosure, the first entity obtains the target key from other core network devices, so that the first entity can ultimately derive the OSCORE master secret based on the target key, so that the first entity can achieve secure communication with the UE based on the derived OSCORE master secret, thereby ensuring the security and stability of wireless communication.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

FIG. 4 is a flow chart of a method for key negotiation provided by an embodiment of the present disclosure. The method is performed by a first entity. As shown in FIG. 4, the method for key negotiation may include the following steps.

Step 401, in response to the key negotiation request being triggered and sent by a CoAP client, and the CoAP client being located in a UICC of the UE, the key negotiation request includes at least one of the A-KID, the B-TID, or the first key indication information.

For a detailed description of step 401, reference may be made to the description of the aforementioned embodiments.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

FIG. 5 is a flow chart of a method for key negotiation provided by an embodiment of the present disclosure. The method is performed by a first entity. As shown in FIG. 5, the method for key negotiation may include the following steps.

Step 501, in response to the key negotiation request being triggered and sent by a CoAP client, and the CoAP client being located in an ME of the UE, the key negotiation request includes at least one of the A-KID, the B-TID, or the second key indication information.

For a detailed description of step 501, reference may be made to the description of the aforementioned embodiments.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

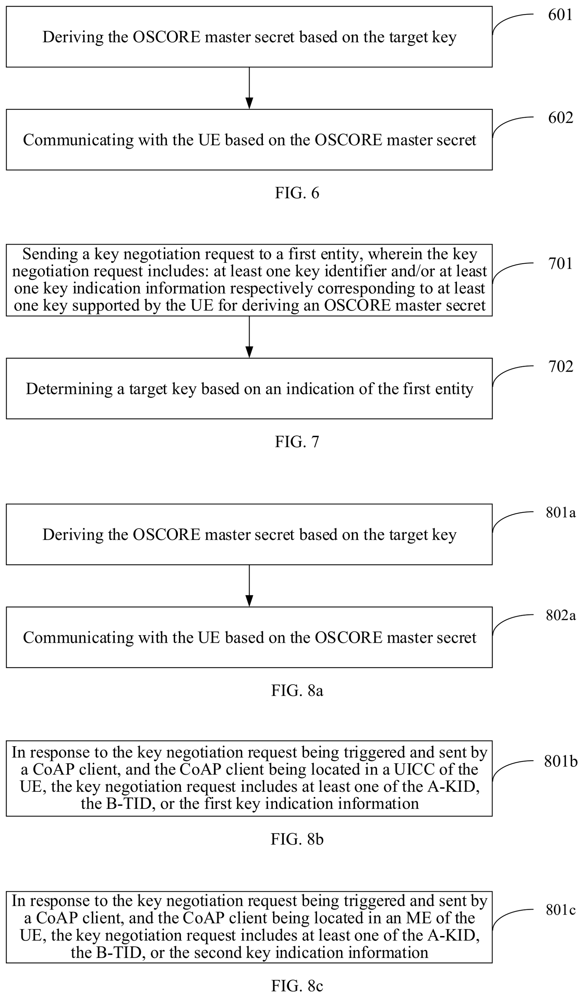

FIG. 6 is a flow chart of a method for key negotiation provided by an embodiment of the present disclosure. The method is performed by a first entity. As shown in FIG. 6, the method for key negotiation may include the following steps.

Step 601, the OSCORE master secret is derived based on the target key.

Optionally, in an embodiment of the present disclosure, the first entity may derive the OSCORE master secret based on the target key, or the first entity may directly determine the target key as the OSCORE master secret.

Step 602, the first entity communicates with the UE based on the OSCORE master secret.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

FIG. 7 is a flow chart of a method for key negotiation provided in an embodiment of the present disclosure. The method is executed by a UE. As shown in FIG. 7, the method for key negotiation may include the following steps.

Step 701, a key negotiation request is sent to a first entity, in which the key negotiation request includes at least one key identifier and/or at least one key indication information respectively corresponding to at least one key supported by the UE for deriving an OSCORE master secret.

Optionally, the at least one key identifier includes at least one of: an A-KID corresponding to an AKMA related key, the A-KID indicating that the key supported by the UE for deriving the OSCORE master secret includes the AKMA related key; or a B-TID corresponding to a GBA related key, the B-TID indicating that the key supported by the UE for deriving the OSCORE master secret includes the GBA related key.

Optionally, the GBA related key includes a first key and a second key. The key negotiation request includes the B-TID, and the B-TID includes a first key hint. The first key hint includes first key indication information corresponding to the first key and/or second key indication information corresponding to the second key. The first key indication information indicates that the key supported by the UE for deriving the OSCORE master secret includes the first key in the GBA related key, and the second key indication information indicates that the key supported by the UE for deriving the OSCORE master secret includes the second key in the GBA related key.

Optionally, the GBA related key includes a first key and a second key. The key negotiation request includes the B-TID, and the key negotiation request further includes a first key hint. The first key hint includes first key indication information corresponding to the first key and/or second key indication information corresponding to the second key. The first key indication information indicates that the key supported by the UE for deriving the OSCORE master secret includes the first key in the GBA related key, and the second key indication information indicates that the key supported by the UE for deriving the OSCORE master secret includes the second key in the GBA related key.

Optionally, the key negotiation request is triggered and sent by a CoAP client in the UE. In response to the CoAP client being located in a UICC of the UE, the first key hint includes the first key indication information. In response to the CoAP client being located in an ME of the UE, the first key hint includes the second key indication information.

Optionally, the key negotiation request is sent via a CoAP request message.

Step 702, a target key is determined based on an indication of the first entity.

Optionally, in an embodiment of the present disclosure, determining the target key based on the indication of the first entity may include the following steps. A key negotiation response sent from the UE is received, wherein the key negotiation response comprises a second key hint, and the second key hint indicates the target key. For relevant introduction of the second key hint, reference can be made to the description above embodiments. Further the UE can determine the target key based on the second key hint, and then derive a corresponding target key based on the target information.

Optionally, in an embodiment of the present disclosure, the UE may determine that the key negotiation fails based on an indication of the first entity.

In addition, for a detailed description of steps 701-702, reference may be made to the description of the aforementioned embodiments.

In summary, with the method for key negotiation provided by embodiments of the present disclosure, the UE may send the key negotiation request to the first entity, and the key negotiation request includes the at least one key identifier and/or the at least one key indication information respectively corresponding to the at least one key supported by the UE for deriving the OSCORE master secret. After that, the target key is determined based on the indication of the first entity, and the target key is a key for deriving the OSCORE master secret selected by the first entity from the at least one key indicated by at least one key identifier and/or the at least one key indication information in the key negotiation request. It can be seen that, embodiments of the present disclosure provides a method for key negotiation for negotiating between the UE and the first entity which key to use to derive the OSCORE master secret, thereby ensuring that the UE and the first entity can successfully derive the OSCORE master secret, so that secure communication based on the OSCORE master secret can be achieved between the UE and the first entity, and the security and stability of wireless communication are ensured.

FIG. 8a is a flow chart of a method for key negotiation provided by an embodiment of the present disclosure. The method is executed by a UE. As shown in FIG. 8a, the method for key negotiation may include the following steps.

Step 801a, an OSCORE master secret is derived based on the target key.

Step 802a, the UE communicates with the first entity based on the OSCORE master secret.

For a detailed description of steps 801a - 802a, reference may be made to the description of the aforementioned embodiments.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

FIG. 8b is a flow chart of a method for key negotiation provided by an embodiment of the present disclosure. The method is executed by a UE. As shown in FIG. 8b, the method for key negotiation may include the following steps.

Step 801b, in response to the key negotiation request being triggered and sent by a CoAP client, and the CoAP client being located in a UICC of the UE, the key negotiation request includes at least one of the A-KID, the B-TID, or the first key indication information.

For a detailed description of step 801b, reference may be made to the description of the aforementioned embodiments.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

FIG. 8c is a flow chart of a method for key negotiation provided in an embodiment of the present disclosure. The method is executed by a UE. As shown in FIG. 8c, the method for key negotiation may include the following steps.

Step 801c, in response to the key negotiation request being triggered and sent by the a CoAP client, and the CoAP client being located in an ME of the UE, the key negotiation request includes at least one of the A-KID, the B-TID, or the second key indication information.

For a detailed description of step 801c, reference may be made to the description of the aforementioned embodiments.

In summary, with the method for key negotiation provided in the embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

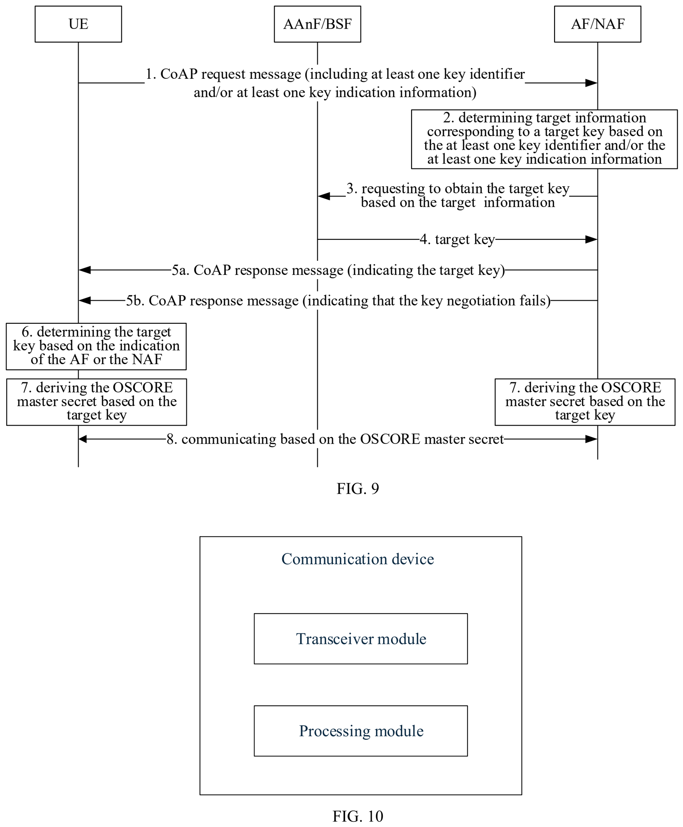

FIG. 9 is a flow chart illustrating interaction of a method for key negotiation provided by an embodiment of the present disclosure. As shown in FIG. 9, the method for key negotiation may include the following steps.

Step 1, a UE or a CoAP client in the UE sends a CoAP request message to an AF or an NAF. The CoAP request message includes at least one key identifier and/or at least one key indication information respectively corresponding to at least one key supported by the UE for deriving an OSCORE master secret.

Step 2, the AF or NAF determines target information based on the at least one key identifier and/or the at least one key indication information, wherein the target information is used to indicate a target key or to indicate a key negotiation failure, and the target key is a key determined by a first entity for deriving the OSCORE master secret. When the target information is used to indicate the target key, steps 3-4, 5a, and 6-8 may be performed subsequently. When the target information is used to indicate the key negotiation failure, step 5b may be performed subsequently.

Step 3, the AF or the NAF requests an AAnF or a BSF to obtain the target key based on the target information.

Step 4, the AF or the NAF receives the target key sent by the AAnF or the BSF.

Step 5a, the AF or the NAF sends a CoAP response message to the UE, wherein the CoAP response message indicates the target key.

Step 5b, the AF or the NAF sends a CoAP response message to the UE, wherein the CoAP response message is used to indicate that the key negotiation fails.

Step 6, the UE determines the target key based on the indication of the AF or the NAF.

Step 7, the AF or the NAF and UE derive the OSCORE master secret based on the target key.

Step 8, the AF or the NAF and UE performs communication based on the OSCORE master secret.

For a detailed description of the above steps 1 to 8, reference may be made to the description of the aforementioned embodiments.

Optionally, in an embodiment of the present disclosure, the above steps 3-4 and step 5a may be performed simultaneously, or step 5a may be performed first and then steps 3-4, or steps 3-4 may be performed first and then step 5a. The present disclosure embodiment does not limit this.

In summary, with the method for key negotiation provided in embodiments of the present disclosure, the method for key negotiation is provided, which is used for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, ensuring the security and stability of wireless communication.

Optionally, in an embodiment of the present disclosure, a communication system is further provided, which may include a UE and a core network device, and the core network device may include an AF or a NAF (that is, the core network device may be understood as the first entity mentioned above). The core network device is configured to implement the method for key negotiation described in the embodiments of FIGs. 2-6 above, and the UE is configured to implement the method for key negotiation described in the embodiments of FIGs. 7-8c above.

Optionally, in an embodiment of the present disclosure, a method for key negotiation is further provided, which is performed the above communication system. The method may include: sending, by a UE, a key negotiation request to a core network device, wherein the key negotiation request comprises: at least one key identifier and/or at least one key indication information respectively corresponding to at least one key supported by the UE for deriving an OSCORE master secret; determining, by the core network device, target information based on the at least one key identifier and/or the at least one key indication information in the key negotiation request, wherein the target information indicates a target key, and the target key is used for deriving the OSCORE master secret; and indicating, by the core network device, the target key to the UE based on the target information.

For a detailed description of the above method, reference may be made to the description of the aforementioned embodiments.

FIG. 10 is a block diagram of a communication device provided by an embodiment of the present disclosure. As shown in FIG. 10, the device may include a transceiver module and a processing module.

The transceiver module is configured to receive a key negotiation request sent from a UE, wherein the key negotiation request comprises: at least one key identifier and/or at least one key indication information respectively corresponding to at least one key supported by the UE for deriving an OSCORE master secret.

The processing module is configured to determine target information based on the at least one key identifier and/or the at least one key indication information in the key negotiation request, wherein the target information indicates a target key, and the target key is used for deriving the OSCORE master secret.

The transceiver module is further configured to indicate the target key to the UE based on the target information.

In summary, with the communication device provided by embodiments of the present disclosure, the first entity may receive the key negotiation request sent by the UE, and the key negotiation request includes the at least one key identifier and/or the at least one key indication information corresponding to the at least one key supported by the UE for deriving the OSCORE master secret; thereafter, the first entity may determine the target information based on at least one key identifier and/or the at least one key indication information in the key negotiation request, and the target information is used to indicate the target key, and the target key is the key for deriving the OSCORE master secret selected by the first entity from the at least one key indicated by the at least one key identifier and/or the at least one key indication information in the key negotiation request; and the first entity may indicate the target key to the UE based on the target information. In this way, embodiments of the present disclosure provide a method for key negotiation for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, and the security and stability of wireless communication can be ensured.

Optionally, in an embodiment of the present disclosure, the at least one key identifier includes at least one of: an A-KID corresponding to an AKMA related key, wherein the A-KID indicates that the key supported by the UE for deriving the OSCORE master secret comprises the AKMA related key; or a B-TID corresponding to a GBA related key, wherein the B-TID indicates that the key supported by the UE for deriving the OSCORE master secret comprises the GBA related key.

Optionally, in an embodiment of the present disclosure, the GBA related key includes a first key and a second key. The key negotiation request includes the B-TID, and the B-TID comprises a first key hint. The first key hint comprises first key indication information corresponding to the first key and/or second key indication information corresponding to the second key. The first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

Optionally, in an embodiment of the present disclosure, the GBA related key includes a first key and a second key. The key negotiation request comprises the B-TID, and the key negotiation request further comprises a first key hint. The first key hint comprises first key indication information corresponding to the first key and/or second key indication information corresponding to the second key. The first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

Optionally, in an embodiment of the present disclosure, the key negotiation request is triggered and sent by a CoAP client in the UE. In response to the CoAP client being located in a UICC of the UE, the first key hint includes the first key indication information. In response to the CoAP client being located in an ME of the UE, the first key hint includes the second key indication information.

Optionally, in an embodiment of the present disclosure, the processing module is further configured to: select, based on a capability and/or a local priority policy of the first entity, the target key from the at least one key indicated by the key negotiation request; and determine a key identifier and/or key indication information corresponding to the target key as the target information.

Optionally, in an embodiment of the present disclosure, the target information includes the A-KID, and the target information is used to indicate the AKMA related key; or the target information includes the B-TID and the first key indication information, and the target information is used to indicate the first key; or the target information includes the B-TID and the second key indication information, and the target information is used to indicate the second key.

Optionally, in an embodiment of the present disclosure, the device is further configured to: obtain the target key based on the target information.

Obtaining the target key based on the target information includes: in response to the target information comprising the A-KID, obtaining the AKMA related key K_{AF} from an AAnF based on the target information; in response to the target information comprising the B-TID and the first key indication information or in response to the target information comprising the B-TID and the second key indication information, obtaining the first key or the second key from a BSF based on the target information.

Optionally, in an embodiment of the present disclosure, the transceiver module is further configured to: send a key negotiation response the UE, wherein the key negotiation response comprises a second key hint, the second key hint is determined based on the target information, and the second key hint indicates the target key.

Optionally, in an embodiment of the present disclosure, the device is further configured to: derive the OSCORE master secret based on the target key; and communicate with the UE based on the OSCORE master secret.

Optionally, in an embodiment of the present disclosure, the key negotiation request is sent via a CoAP request message.

Optionally, in an embodiment of the present disclosure, the key negotiation response is sent via a CoAP response message.

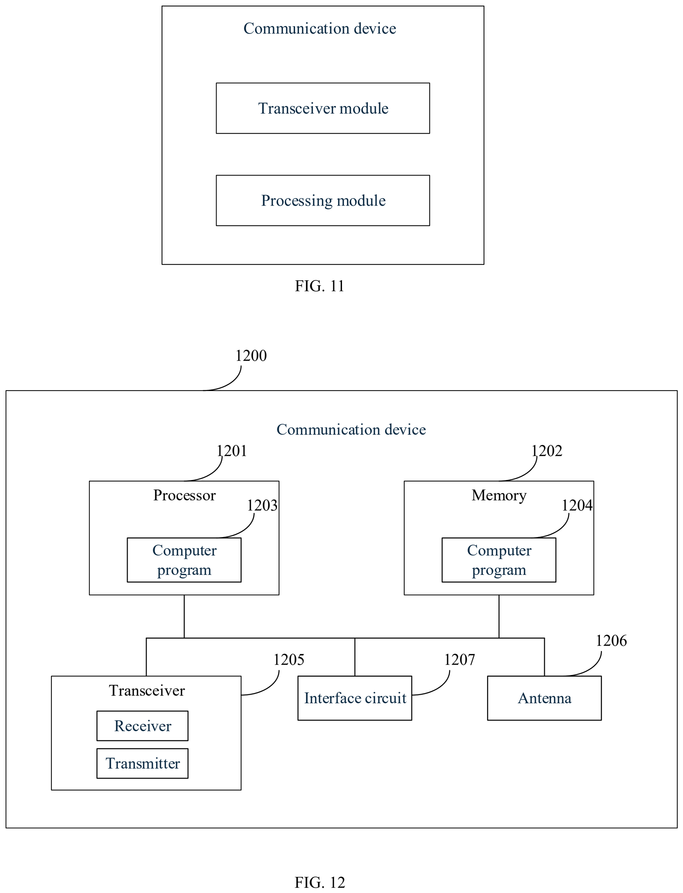

FIG. 11 is a block diagram of a communication device provided by an embodiment of the present disclosure. As shown in FIG. 11, the device may include a transceiver module and a processing module.

The transceiver module is configured to send a key negotiation request to a first entity, wherein the key negotiation request comprises: at least one key identifier and/or at least one key indication information respectively corresponding to at least one key supported by the UE for deriving an OSCORE master secret.

The processing module is configured to determine a target key based on an indication of the first entity.

In summary, with the communication device provided by embodiments of the present disclosure, the UE may send the key negotiation request to the first entity, and the key negotiation request includes the at least one key identifier and/or the at least one key indication information corresponding to the at least one key supported by the UE for deriving the OSCORE master secret; thereafter, the target key is determined based on the indication of the first entity, and the target key is a key for deriving the OSCORE master secret selected by the first entity from the at least one key indicated by the at least one key identifier and/or the at least one key indication information in the key negotiation request. In this way, embodiments of the present disclosure provide a method for key negotiation for the UE and the first entity to negotiate which key to use to derive the OSCORE master secret, thereby ensuring that the UE and the first entity can successfully derive the OSCORE master secret, so that secure communication based on the OSCORE master secret can be achieved between the UE and the first entity, and the security and stability of wireless communication can be ensured.

Optionally, in an embodiment of the present disclosure, the at least one key identifier includes at least one of: an A-KID corresponding to an AKMA related key, wherein the A-KID indicates that the key supported by the UE for deriving the OSCORE master secret includes the AKMA related key; or a B-TID corresponding to a GBA related key, where the B-TID indicating that the key supported by the UE for deriving the OSCORE master secret includes the GBA related key.

Optionally, in an embodiment of the present disclosure, the GBA related key includes a first key and a second key. The key negotiation request includes the B-TID, and the B-TID includes a first key hint. The first key hint includes first key indication information corresponding to the first key and/or second key indication information corresponding to the second key. The first key indication information indicates that the key supported by the UE for deriving the OSCORE master secret includes the first key in the GBA related key, and the second key indication information indicates that the key supported by the UE for deriving the OSCORE master secret includes the second key in the GBA related key.

Optionally, in an embodiment of the present disclosure, the GBA related key includes a first key and a second key. The key negotiation request includes the B-TID, and the key negotiation request further includes a first key hint. The first key hint includes first key indication information corresponding to the first key and/or second key indication information corresponding to the second key. The first key indication information indicates that the key supported by the UE for deriving the OSCORE master secret includes the first key in the GBA related key, and the second key indication information indicates that the key supported by the UE for deriving the OSCORE master secret includes the second key in the GBA related key.

Optionally, in an embodiment of the present disclosure, the key negotiation request is triggered and sent by a CoAP client in the UE. In response to the CoAP client being located in a UICC of the UE, the first key hint includes the first key indication information. In response to the CoAP client being located in an ME of the UE, the first key hint includes the second key indication information.

Optionally, in an embodiment of the present disclosure, the device is further configured to: derive the OSCORE master secret based on the target key; and communicate with the first entity based on the OSCORE master secret.

Optionally, in an embodiment of the present disclosure, the key negotiation request is sent via a CoAP request message.

Optionally, in an embodiment of the present disclosure, the processing module is further configured to: receive a key negotiation response sent from the UE, wherein the key negotiation response includes a second key hint, the second key hint indicates the target key; and determine the target key based on the second key hint.

Optionally, in an embodiment of the present disclosure, the key negotiation response is sent via a CoAP response message.

As shown in FIG. 12, FIG. 12 is a schematic diagram of a structure of a communication device 1200 provided in an embodiment of the present disclosure. The communication device 1200 can be a base station, a terminal, a chip, a chip system, or a processor that supports the base station to implement the above methods, or a chip, a chip system, or a processor that supports the terminal to implement the above methods. The communication device can be used to implement the method described in the above method embodiments, and reference may be made to the description in the above method embodiments for the details.

The communication device 1200 may include one or more processors 1201. The processor 1201 may be a general-purpose processor or a dedicated processor, etc. For example, it may be a baseband processor or a central processing unit. The baseband processor may be configured to process a communication protocol and communication data, and the central processor may be configured to control the communication device (e.g., a base station, a baseband chip, a terminal, a terminal chip, a DU or CU, etc.), to execute a computer program, and process data of the computer program.

Optionally, the communication device 1200 may further include one or more memories 1202, on which a computer program 1204 may be stored. The processor 1201 executes the computer program 1204 so that the communication device 1200 performs the method described in the above method embodiments. Optionally, the memory 1202 may further store data. The communication device 1200 and the memory 1202 may be provided separately or integrated together.

Optionally, the communication device 1200 may further include a transceiver 1205 and an antenna 1206. The transceiver 1205 may be referred to as a transceiver unit, a transceiver, or a transceiver circuit, etc., which may be configured to implement a transceiver function. The transceiver 1205 may include a receiver and a transmitter, the receiver may be referred to as a receiver machine or a receiving circuit, etc., and is used to implement a receiving function; the transmitter may be referred to as a transmitter machine or a transmitting circuit, etc., and is used to implement a transmitting function.

Optionally, the communication device 1200 may further include one or more interface circuits 1207. The interface circuit 1207 is configured to receive code instructions and transmit configured to the processor 1201. The processor 1201 runs the code instructions, so that the communication device 1200 performs the method described in the above method embodiments.

In an implementation, the processor 1201 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be configured to read and write code/data, or the above-mentioned transceiver circuit, interface, or interface circuit may be configured to transmit or deliver a signal.

In an implementation, the processor 1201 may be stored with a computer program 1203, which runs on the processor 1201 so that the communication device 1200 performs the method described in the above method embodiments. The computer program 1203 may be solidified in the processor 1201, in which case the processor 1201 may be implemented by hardware.

In an implementation, the communication device 1200 may include a circuit that can implement the functions of sending, receiving or communicating in the aforementioned method embodiments. The processor and transceiver described in the present disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may further be manufactured using various IC process technologies, such as complementary metal oxide semiconductor (CMOS), N-type metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a base station or a terminal, but the scope of the communication device described in the present disclosure is not limited thereto, and a structure of the communication device may not be limited by FIG. 12. The communication device may be a stand-alone device or may be part of a larger device. For example, the communication device may be:
(1) a stand-alone integrated circuit (IC), or a chip, or a system on chip or a subsystem;
(2) a set of one or more ICs, and optionally, which may include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a base station, a cloud device, an artificial intelligence device, etc.;
(6) others.

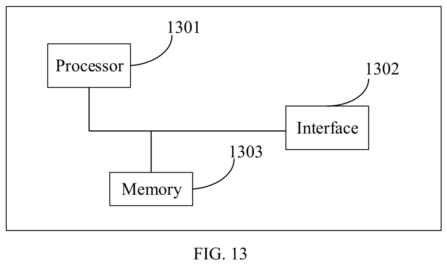

For the case where the communication device can be a chip or a chip system, reference may be made to the schematic diagram of the chip shown in FIG. 13. The chip shown in FIG. 13 includes a processor 1301 and an interface 1302. The number of processors 1301 can be one or more, and the number of interfaces 1302 can be multiple.

Optionally, the chip further includes a memory 1303, and the memory 1303 is used to store necessary computer programs and data.

Those skilled in the art may understand that various illustrative logical blocks and steps listed in embodiments of the present disclosure may be implemented by electronic hardware, computer software, or a combination of electronic hardware and computer software. Whether the function is implemented by hardware or software depends on specific applications and design requirements for an overall system. Those skilled in the art may use various methods to implement the functions described for each specific application, but such implementation should not be understood as beyond the scope of protection of the embodiments of the present disclosure.

The present disclosure further provides a readable storage medium having instructions stored thereon. When the instructions are executed by a computer, the functions of any one of the method embodiments are implemented.

The present disclosure further provides a computer program product, which, when executed by a computer, implements functions of any of the above method embodiments.

In the above embodiments, the functions may be implemented in whole or in part by software, hardware, firmware, or any combination thereof. When implemented by software, the functions may be implemented in whole or in part in the form of a computer program product. The computer program product includes one or more computer programs. When the computer program is loaded and executed on a computer, procedures or functions described in embodiments of the present disclosure are generated in whole or in part. The computer can be a general-purpose computer, a dedicated-purpose computer, a computer network, or other programmable device. The computer program can be stored in a computer-readable storage medium, or transmitted from one computer-readable storage medium to another computer-readable storage medium. For example, the computer program can be transmitted from one website site, computer, server or data center via wired (e.g., a coaxial cable, a fiber optic, a digital subscriber line (digital subscriber line, DSL)) or wireless (e.g., infrared, radio, microwave, etc.) means to another website site, computer, server or data center. The computer-readable storage medium can be any available medium that may be accessed by a computer or a data storage device such as a server or data center that includes one or more available media integrated. The readable medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art can understand that various numerical numbers such as first and second involved in the present disclosure are only used for the convenience of description and are not used to limit the scope of the embodiments of the present disclosure, or indicate the order of precedence.

The term "at least one" in the present disclosure may also be described as one or more, and the phase "a plurality of" may be two, three, four or more, which is not limited in the present disclosure. In embodiments of the present disclosure, for a kind of technical feature, technical features in the kind of technical feature are distinguished by "first", "second", "third", "A", "B", "C" and "D", etc., and there is no order of precedence or magnitude between the technical features described in the "first", "second", "third", "A", "B", "C" and "D".

Corresponding relationships indicated by tables in the present disclosure can be configured or predefined. Values of information in each table are only examples and can be configured as other values, which are not limited in the present disclosure. When configuring the corresponding relationship between information and each parameter, it is not necessarily required to configure all corresponding relationships illustrated in each table. For example, in the table in the present disclosure, corresponding relationships shown in some rows may not be configured. For another example, appropriate deformation adjustments can be made based on the above table, such as splitting, merging, etc. Names of parameters shown in titles in the above tables can also use other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, hash tables or hash tables.

The term "predefined" in the present disclosure may be understood as defined, defined in advance, stored, pre-stored, pre-negotiated, pre-configured, solidified, or pre-fired.

Those skilled in the related art may appreciate that units and algorithm steps of each example described in embodiments of the disclosure can be implemented by electronic hardware, or a combination of computer software and electronic hardware. Whether the functions are performed by hardware or software depends on a specific application and a design constraint of the technical solution. Those skilled in the art can adopt different methods to implement the described functions for each specific application, but such implementation should not be considered to be beyond the scope of this disclosure.

Those skilled in the art can clearly understand that, for the convenience and brevity of description, for the specific working processes of the system, device and unit described above, reference may be made to a corresponding process in the aforementioned method embodiments, and details are not repeated here.

The above are only implementations of the disclosure. However, the protection scope of the disclosure is not limited here. Changes and substitutions that may be easily considered by those skilled in the art shall be included within the protection scope of the disclosure. Thus, the protection scope of the disclosure shall be subject to the protection scope of claims.

## Claims

1. A method for key negotiation, performed by a first entity, comprising:
receiving a key negotiation request sent from a user equipment (UE), wherein the key negotiation request comprises: at least one key identifier and/or at least one key indication information respectively corresponding to at least one key supported by the UE for deriving an object security for constrained representational state transfer environment (OSCORE) master secret;
determining target information based on the at least one key identifier and/or the at least one key indication information in the key negotiation request, wherein the target information indicates a target key, and the target key is used for deriving the OSCORE master secret; and
indicating the target key to the UE based on the target information.

2. The method according to claim 1, wherein the at least one key identifier comprises at least one of:
an authentication and key management for applications (AKMA) key identifier (A-KID) corresponding to an AKMA related key, wherein the A-KID indicates that the key supported by the UE for deriving the OSCORE master secret comprises the AKMA related key; or
a bootstrapping transaction identifier (B-TID) corresponding to a generic bootstrapping architecture (GBA) related key, wherein the B-TID indicates that the key supported by the UE for deriving the OSCORE master secret comprises the GBA related key.

3. The method according to claim 2, wherein the GBA related key comprises a first key and a second key;
the key negotiation request comprises the B-TID, and the B-TID comprises a first key hint, the first key hint comprises first key indication information corresponding to the first key and/or second key indication information corresponding to the second key, the first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

4. The method according to claim 2, wherein the GBA related key comprises a first key and a second key;
the key negotiation request comprises the B-TID, and the key negotiation request further comprises a first key hint, the first key hint comprises first key indication information corresponding to the first key and/or second key indication information corresponding to the second key, the first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

5. The method according to claim 3 or 4, wherein the key negotiation request is triggered and sent by a constrained application protocol (CoAP) client in the UE;
in response to the CoAP client being located in a universal integrated circuit card (UICC) of the UE, the first key hint comprises the first key indication information;
in response to the CoAP client being located in a mobile equipment (ME) of the UE, the first key hint comprises the second key indication information.

6. The method according to any one of claims 2 to 5, wherein determining the target information based on the at least one key identifier and/or the at least one key indication information in the key negotiation request comprises:
selecting, based on a capability and/or a local priority policy of the first entity, the target key from the at least one key indicated by the key negotiation request; and
determining a key identifier and/or key indication information corresponding to the target key as the target information.

7. The method according to claim 6, wherein the target information comprises the A-KID, and the target information is used to indicate the AKMA related key; or
the target information comprises the B-TID and the first key indication information, and the target information is used to indicate the first key; or
the target information comprises the B-TID and the second key indication information, and the target information is used to indicate the second key.

8. The method according to any one of claims 2 to 7, further comprising:
obtaining the target key based on the target information;
wherein obtaining the target key based on the target information comprises:
in response to the target information comprising the A-KID, obtaining the AKMA related key K_{AF} from an AKMA anchor function (AAnF) based on the target information;
in response to the target information comprising the B-TID and the first key indication information or in response to the target information comprising the B-TID and the second key indication information, obtaining the first key or the second key from a bootstrapping server function (BSF) based on the target information.

9. The method according to any one of claims 2 to 8, wherein indicating the target key to the UE based on the target information comprises:
sending a key negotiation response the UE, wherein the key negotiation response comprises a second key hint, the second key hint is determined based on the target information, and the second key hint indicates the target key.

10. The method according to claim 8, further comprising:
deriving the OSCORE master secret based on the target key; and
communicating with the UE based on the OSCORE master secret.

11. The method according to any one of claims 1 to 10, wherein the key negotiation request is sent via a CoAP request message.

12. The method according to claim 9, wherein the key negotiation response is sent via a CoAP response message.

13. A method for key negotiation, performed by a user equipment (UE), comprising:
sending a key negotiation request to a first entity, wherein the key negotiation request comprises: at least one key identifier and/or at least one key indication information respectively corresponding to at least one key supported by the UE for deriving an object security for constrained representational state transfer environment (OSCORE) master secret; and
determining a target key based on an indication of the first entity.

14. The method according to claim 13, wherein the at least one key identifier comprises at least one of:
an authentication and key management for applications (AKMA) key identifier (A-KID) corresponding to an AKMA related key, wherein the A-KID indicates that the key supported by the UE for deriving the OSCORE master secret comprises: the AKMA related key; or
a bootstrapping transaction identifier (B-TID) corresponding to a generic bootstrapping architecture (GBA) related key, wherein the B-TID indicating that the key supported by the UE for deriving the OSCORE master secret comprises the GBA related key.

15. The method according to claim 14, wherein the GBA related key comprises a first key and a second key;
the key negotiation request comprises the B-TID, and the B-TID comprises a first key hint, the first key hint comprises first key indication information corresponding to the first key and/or second key indication information corresponding to the second key, the first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

16. The method according to claim 14, wherein the GBA related key comprises a first key and a second key;
the key negotiation request comprises the B-TID, and the key negotiation request further comprises a first key hint, the first key hint comprises first key indication information corresponding to the first key and/or second key indication information corresponding to the second key, the first key indication information indicates that the key supported by the UE for deriving the OSCORE master secret comprises the first key in the GBA related key, and the second key indication information indicates that the key supported by the UE for deriving the OSCORE master secret comprises the second key in the GBA related key.

17. The method according to claim 15 or 16, wherein the key negotiation request is triggered and sent by a constrained application protocol (CoAP) client in the UE;
in response to the CoAP client being located in a universal integrated circuit card (UICC) of the UE, the first key hint comprises the first key indication information;
in response to the CoAP client being located in a mobile equipment (ME) of the UE, the first key hint comprises the second key indication information.

18. The method according to any one of claims 13 to 17, further comprising:
deriving the OSCORE master secret based on the target key; and
communicating with the first entity based on the OSCORE master secret.

19. The method according to any one of claims 13 or 18, wherein the key negotiation request is sent via a CoAP request message.

20. The method according to any one of claims 13 to 19, wherein determining the target key based on the indication of the first entity comprises:
receiving a key negotiation response sent from the UE, wherein the key negotiation response comprises a second key hint, the second key hint indicates the target key; and
determining the target key based on the second key hint.

21. The method according to claim 20, wherein the key negotiation response is sent via a CoAP response message.

22. A communication device, comprising:
a transceiver module, configured to receive a key negotiation request sent from a user equipment (UE), wherein the key negotiation request comprises: at least one key identifier and/or at least one key indication information respectively corresponding to at least one key supported by the UE for deriving an object security for constrained representational state transfer environment (OSCORE) master secret; and
a processing module, configured to determine target information based on the at least one key identifier and/or the at least one key indication information in the key negotiation request, wherein the target information indicates a target key, and the target key is used for deriving the OSCORE master secret;
wherein the transceiver module is further configured to indicate the target key to the UE based on the target information.

23. A communication device, comprising:
a transceiver module, configured to send a key negotiation request to a first entity, wherein the key negotiation request comprises: at least one key identifier and/or at least one key indication information respectively corresponding to at least one key supported by a user equipment (UE) for deriving an object security for constrained representational state transfer environment (OSCORE) master secret; and
a processing module, configured to determine a target key based on an indication of the first entity.

24. A communication device, comprising a processor and a memory, wherein the memory has a computer program stored therein, and the processor executes the computer program stored in the memory to cause the communication device to perform the method according to any one of claims 1 to 12, or the processor executes the computer program stored in the memory to cause the communication device to perform the method according to any one of claims 13 to 21.

25. A communication device, comprising: a processor and an interface circuit, wherein
the interface circuit is configured to receive code instructions and transmit the code instructions to the processor;
the processor is configured to execute the code instructions to perform the method according to any one of claims 1 to 12, or execute the code instructions to perform the method according to any one of claims 13 to 21.

26. A communication system, comprising a user equipment (UE) and a core network device; wherein
the core network device is configured to implement the method according to any one of claims 1 to 12, and the UE is configured to implement the method according to any one of claims 13 to 21.

27. A communication method, performed by a communication system, comprising:
sending, by a user equipment (UE), a key negotiation request to a core network device, wherein the key negotiation request comprises: at least one key identifier and/or at least one key indication information respectively corresponding to at least one key supported by the UE for deriving an object security for constrained representational state transfer environment (OSCORE) master secret;
determining, by the core network device, target information based on the at least one key identifier and/or the at least one key indication information in the key negotiation request, wherein the target information indicates a target key, and the target key is used for deriving the OSCORE master secret; and
indicating, by the core network device, the target key to the UE based on the target information.

28. A computer-readable storage medium for storing instructions that, when executed, causes the method according to any one of claims 1 to 12 to be implemented, or, when executed, causes the method according to any one of claims 13 to 21 to be implemented.
